# EUROPEAN PATENT SPECIFICATION

(11) **EP 3 822 434 B1**
(45) Date of publication and mention of the grant of the patent: **07.02.2024**
(21) Application number: 20208516.3
(22) Date of filing: 18.11.2020
(51) Int. Cl.: E05B 19/00, E05B 27/00, B21D 53/42, B23C 3/35

(54) **KEY BLANK, KEY, LOCK AND METHOD**
SCHLÜSSELROHLING, SCHLÜSSEL, SCHLOSS UND VERFAHREN
ÉBAUCHE DE CLÉ, CLÉ, SERRURE ET PROCÉDÉ

(30) Priority: 18.11.2019 CH 14572019
(43) Date of publication of application: 19.05.2021
(73) Proprietor: SEA Schliess-Systeme AG, 3052 Zollikofen (CH)
(72) Inventor: Tahiri, Fatmir, 3052 Zollikofen (CH); Grossenbacher, Andreas, 3613 Steffisburg (CH)
(74) Representative: Vesterinen, Jussi Tapio

(56) References cited:
- EP-A2- 0 123 192
- US-A- 3 413 831
- US-A- 4 320 638
- US-A1- 2004 221 630
- Ra: "ROUGHNESS CONVERSION CHART SYMBOLS & FINISHING GRADE", , 14 February 2019 (2019-02-14), XP055702330, Retrieved from the Internet: URL:http://rampinelli.eu/wp-content/upload s/2018/01/Roughness-Conversion-Chart-Rampi nelli.pdf [retrieved on 2020-06-08]

## Description

### Field of the invention

The invention relates to key coding arrangements for cylinder locks and key blanks and keys therefor. In particular, but not exclusively, the invention relates to the coding of flat-bladed key blanks in which the key blank is pre-formed with one of the coding surfaces (also referred to as a functional surface).

### Background of the invention

It is known to manufacture flat-bladed keys with recesses, which may also be referred to as dimples, each of which is depth-coded and positioned to interact with a particular pin of the cylinder lock. A cylinder lock may comprise a cylindrical rotor coaxial with a surrounding stator. The cylinder has a longitudinal key channel for receiving the key blade. It may have multiple two-part pins, which may be arranged radially with respect to the axis of rotation of the rotor. Each such two-part pin has a rotor part, located in a radial hole in the rotor, and a stator part, located in a radial hole in the stator. The stator part is spring-biased towards the centre of the rotor. The length of the rotor part of the pin is such that, when the pin engages with a corresponding recess of the correct depth, the two parts of the pin meet each other at the rotor/stator interface, so that the rotor is free to rotate. When the length (coding) of the rotor part does not match the depth (coding) of the corresponding recess, the two parts of the pin meet each other at a radial distance inward or outward of the rotor/stator interface, such that the rotor is blocked from rotation.

### Prior art

Reversible flat-bladed keys with coding recesses in each side surface are well-known in the prior art. An example of a prior art key blade with various arrangements of coding recesses is described in US patent US3393542. Conical recesses are formed at various depths, in various positions and at various angles so as to engage with the respective pins of a cylinder lock. Such prior art key coding schemes are relatively easy to comprehend, and the geometry is measurable without sophisticated equipment. It is also relatively straightforward to machine the recesses in a standard flat metal key blank. As a result, prior art flat-bladed keys may be vulnerable to copying or faking. US3413831 (A) discloses key-operated rotatable plug and cylinder lock in which the plug and cylinder are provided with pin-receiving holes that are disposed at one or more different angles with respect to the sides of the key inserted into the plug. US2004221630 (A1) relates to a changeable lock assembly suitable for re-keying a lock without disassembly of the lock. US4320638 (A) relates to a key blank in which the upper edge surface of the blade has a longitudinal groove dividing that surface into two laterally spaced parts, and a relatively narrow waist is formed in the blade upper portion by progressive narrowing of the blade width downwardly from and adjacent the upper edge surface. EP0123192 (A2) discloses a key for cylinder locks, the variation in profile of which is formed by zones which form individual ribs and grooves. A further problem with existing keys is that they are prone to wear. Each time the key is inserted into a cylinder lock, the hard tips of multiple pins abrade along the same path on the metal key surface, gradually wearing away a small channel. Keys are typically made using blanks punched or stamped from a metal alloy. Although punched or stamped blanks may be precise enough for some lock applications, there is a need for more precision-engineered keys. For a given blade length or area, existing reversible flat-bladed key blanks provide coding regions for a limited number of pins with a limited number of coding permutations. There is a need for a key blank which, for a given key blade length or area, facilitates a greater number of coding permutations, and/or a greater number of recesses for engagement with a greater number of pins. Similarly, there is a need for a key with such increased coding permutations and pin engagements. Put another way, there is a need for a key blank which facilitates a greater density of pin engagements for a particular blade length or area, and a key with such greater pin engagement density. There is also a need for a key blank which facilitates key coding schemes which are more difficult to decode, measure and/or copy, and for keys coded with such schemes.

### Brief description of the invention

The present invention aims to overcome at least some of the disadvantages of prior art keys and lock systems. To this end, a key blank according to the invention is described in the attached claim 1, a key made from such a blank is described in claim 6, a cylinder lock according to the invention is described in claim 12, a lock system according to the invention is described in claim 13, and methods of producing a key blank and a key according to the invention are described in claims 14 and 16. Further variants of the invention are described in the dependent claims.

By providing one or both of the large faces of the blade of the key blank with a 'valley' having pre-machined, angled functional surfaces ('flanks'), and by forming the coding recesses in at least one of these angled functional surfaces, the coding scheme is rendered less easy to copy or fake, because there is no easy reference for measuring, while still enabling the manufacturer (coder) to form the coding recesses with high precision, because the angled recesses can be machined using a tool held substantially orthogonal to the angled surface, thereby reducing wear and extending the life of the key.

Further advantages of the invention will be apparent from the following description and the attached drawings, in which:
Figure 1 shows a cross-sectional view of an example key blade and cylinder lock according to the invention.
Figure 2 shows an isometric projection view of an example key blade made from a key blank according to the invention.
Figure 3 shows a schematic cross-sectional view of the key blade of figure 2, with a first example of coding recess profiles.
Figures 4a and 4b show side elevation and transverse cross-section views respectively of a first example of the blade of a key blank according to the invention.
Figures 5a and 5b show side elevation and transverse cross-section views respectively of a second example of the blade of a key blank according to the invention.
Figure 6 shows a longitudinal cross-section view of the blade of an example key blank according to a variant of the invention.
Figure 7 shows a schematic cross-sectional view of an example key coding according to the invention, with a second example of coding recess profiles.
Figure 8 shows an isometric schematic view of another example of a key blade coded according to the invention.
Figure 9 shows an isometric schematic view of another example of a key blade coded according to the invention.
Figures 10a to 10b show schematic cross-section views of various examples of key coding and pin displacement configurations according to the invention.
Figure 11 shows a schematic isometric, cutaway view of the relative arrangement of a key blade such as that shown in figure 9 and the pins of the cylinder lock.
Figures 12a to 12c illustrate in schematic cross-section a longitudinal blocking or non-blocking function of a key blade with or without a valley and a run-in according to the invention.
Figures 13 and 14 show examples of arrangements in which a key blade without a valley is inserted into a cylinder lock designed for a key blade with a valley according to the invention.
Figures 15 and 16 show pins of different length engaging with the functional surface of a key blank according to the invention.
Figures 17 to 19 show schematic front elevation views of a cylinder lock according to the invention, with different configurations of key channel profile or face-plate at the entrance to the key channel.
Figures 20 and 21 show an example of a method of manufacturing a key blank according to the invention.
Figures 22 and 23 show another example of a method of manufacturing a key blank according to the invention.
Figures 24a to 24c show isometric, cross-section and side elevation views of a further variant of a key blade according to the invention, with separate outer rows of so-called C-coded recesses.
Figures 25a and 25b show schematic isometric projection views of an example of a further variant of a key blade according to the invention, in which one or more rows of recesses (two outer rows of C-coded recesses in the illustration) are formed as continuous grooves.
Figure 26 shows a cross section of a reversible key blade according to the invention, in a variant similar to those of figures 24a to 24c or figures 25a and 25b, in which valley coding recesses such as those shown in figures 1 to 11 are combined with C-coded recesses or grooves.

It should be noted that the figures are provided merely as an aid to understanding the principles underlying the invention, and should not be taken as limiting the scope of protection sought. In particular, the various combinations of coding arrangements illustrated (coding recesses or grooves on edges 3 or faces 7) are merely intended to present an illustrative subset of the possible combinations of coding arrangements which are foreseen in the scope of the invention. Where multiple coding arrangements are shown, adapted for engaging with more than one row of cylinder-lock pins, it should be understood that the individual coding arrangements for the individual pin rows can be implemented separately, or in the combination shown, or in any other permutation.

Where the same reference numbers are used in different figures, these are intended to indicate similar or equivalent features. It should not be assumed, however, that the use of different reference numbers is intended to indicate any particular degree of difference between the features to which they refer. Unless otherwise indicated, cross-section views of key blades are views from the front (tip) end of the key.

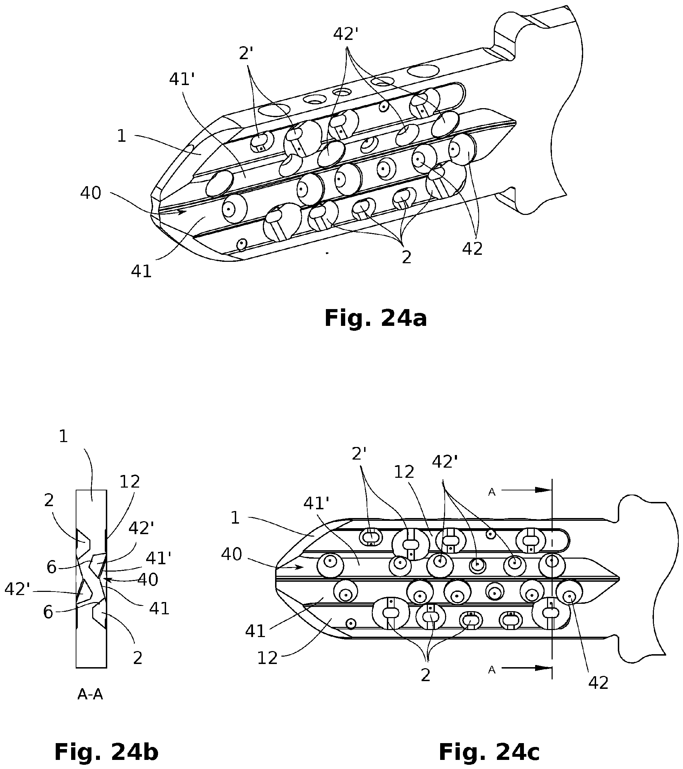

The present disclosure is intended to be read in conjunction with the co-pending patent application with the title "Key, cylinder lock, system and method", filed by the same applicant on the same date as the present specification. In particular, the teachings of the co-pending application which relate to the detail of the C-coding recesses and grooves and their variants are explicitly referred to as additional detail of the C-coding and the C-coded recesses and grooves of the embodiment of figures 24a, 24b, 24c, 25a, 25b and 26 of the present application.

### Detailed description of the invention

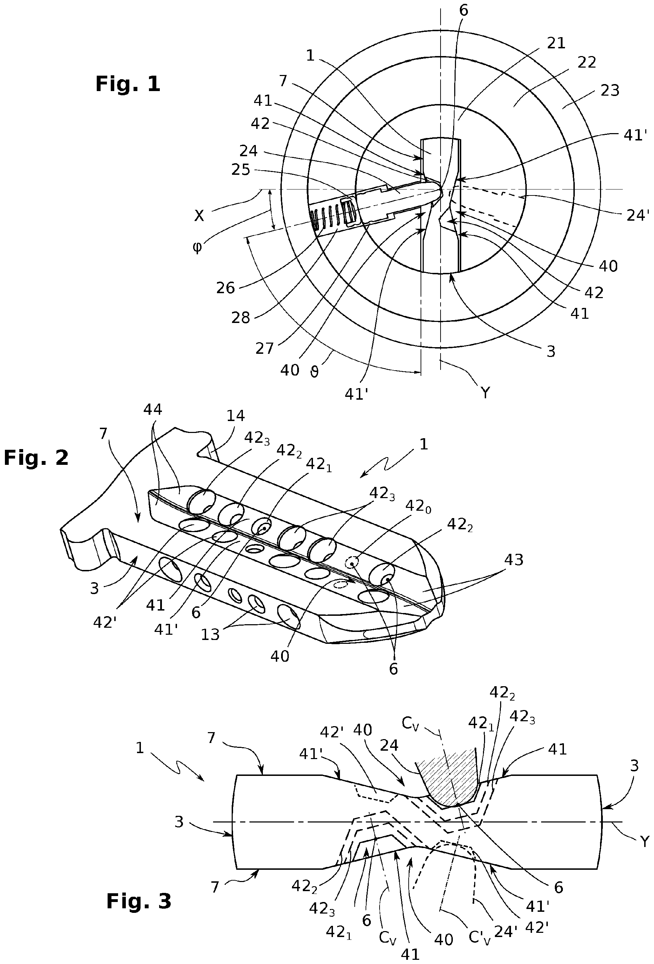

Figures 1 and 2 show how the otherwise flat side surface 7 of an elongate key blade 1 is provided with a longitudinal concavity 40 having a shallow V-section profile (the concavity 40 may alternatively have a U-section or other similar sectional profile) and extending along a majority, or preferably substantially all, of the length of the blade 1 from the shoulder 14 to the tip. The shallow concavity 40 will be referred to in this text as a valley, and its lateral inclined surfaces 41 and 41' will be referred to as its flanks. Typical dimensions of the flat key blade 1 may have a thickness in the range 1.5 mm to 3.5 mm or more preferably 2 mm to 3 mm, a width (height) in the range 6 mm to 12 mm or more preferably 8 mm to 11 mm, and a length in the range 15 mm to 35 mm or more preferably 20 mm to 30 mm, for example. The or each valley 40 may preferably be substantially straight, and located so as to bisect the face 7 of the blade longitudinally. It may be located with the line of its deepest point lying approximately along the centre-line of the key blade 1, for example. Alternatively, the or each valley may be located offset from the centre-line of the key blade. In the case of a reversible key or blank, the offset may preferably be rotationally symmetrical about the longitudinal (rotation) axis of the key, such that the valley on each face 7 is a reversed version of the valley on the opposite face. The or each valley may be between 0.4 mm and 1.0 mm deep, or more preferably between 0.5 mm and 0.8 mm deep, and 3 mm to 8 mm wide, or more preferably 4 mm to 6 mm wide, for example. The or each valley may preferably have a constant profile, at least in its coding region (see below). Alternatively, it may have a profile which varies in depth, width and/or shape along the coding region. The flanks 41, 41' in which the coding recesses are formed may preferably be substantially flat (as in the V-profiled valley), or they may have a slight local curvature (as may be the case for a more U-profiled valley, for example).

In the following text, reference is made variously to the X-axis (thickness), Y-axis (width, height, lateral) and Z-axis (longitudinal) dimensions of the key blank and the key blade. These terms are used in the conventional sense of an X,Y,Z orthogonal coordinate system. An X-Y plane is a plane orthogonal to the Z axis, for example, and a Y-Z plane is orthogonal to the X-axis. A transverse cross-section is in an X-Y plane. References to "radial" and "centre of rotation" and "rotational symmetry" relate to the rotation of the key blade when inserted in the key channel of the rotor of the cylinder lock. The centre of rotation of the rotor may or may not coincide with the central longitudinal Z axis of the key blade, depending on the configuration of the rotor, the pins and the key channel. In the following text and the drawings, the key channel is assumed to be non-central to the rotor, and to extend to the periphery of the rotor (this configuration typically permits easier manufacture of the rotor), but it should be understood that the key channel could alternatively be formed centrally or elsewhere in the rotor's cross-sectional profile. References to the height or vertical dimension of the key relate to the key when inserted in the key channel and the rotor is oriented such that the key channel is vertical in the stator.

The various cylinder locks depicted in the drawings and described in the text comprise rows of radial two-part pins. It should be understood that the invention is not restricted to this type of pin arrangement. It could for example be used with simpler one-part pins. The pins may preferably be radial (ie they each move along a pin-displacement axis which intersects the rotation axis of the key/rotor), or they may be offset from the radial orientation, such that they each move along a displacement axis which does not intersect with the rotation axis. Likewise, although the illustrated examples comprise biasing springs, the rotor pins may be displaced by other means, such as by profiled engagement with the interior surface of the stator, in which case the cylinder lock would not need stator pins or stator pin holes. Unless otherwise stated, a row of pins is considered to comprise at least three pins which are substantially parallel to each other and arranged along the length of the rotor, and/or which are located and oriented such that their tips engage with recesses which are arranged substantially linearly in a row along a longitudinal axis of the key blade.

Figure 1 shows a cross-sectional view of a cylinder lock comprising (optional) housing 23, stator 22, rotor 21 and radial two-part pin 24, 25, with rotor part 24 of the pin located in a rotor pin hole 27 and the stator part 25 of the pin located in a stator pin hole 28 and biased towards the centre of rotation of the rotor 21 by spring 26. The thickness axis of the key (and the key channel) is denoted by X, and the height axis by Y. Z (not shown in figure 1) denotes the longitudinal axis of the key blade 1. The radial pin 24 is inclined at a shallow angle ϕ with respect to the X-Z plane (angle θ with respect to the Y-Z plane) of the key blade 1, and the displacement axis of the pin 24 is substantially orthogonal to the functional surface 41 such that the tip of the pin 24 engages with the functional surface 41 (or the bottom surface of the recess 42, as shown) at a contact point 6 of the functional surface, so the angles of inclination of the functional surface ('flank') from the X-Z and Y-Z planes of the key blade 1 are also ϕ and θ respectively. The angle ϕ may be between 10° and 30°, for example, or preferably between 14° and 25°, and the angle θ may be between 60° and 80°, or between 65° and 76°. As can be seen in figure 1, the key blade 1 is reversible, which means that each side 7 has the same (but reversed) configuration of coding recesses. The term "functional surface" is used in this text to refer to a physical surface which has been pre-machined or otherwise prepared in such a way that it has physical characteristics (eg hardness, surface roughness, wear-resistance etc) which make it suitable as a pin contact surface in repetitive use by a user of the key, such that regions of the pin-contact surface can be used, without further machining, as a ready-made coding surface (typically for the base or zero coding position of the pins).

The pin 24 in figure 1 is one of multiple pins, preferably arranged in a row substantially parallel to each other and distributed along the rotor 21. Figure 1 also shows a second row of pins 24' and a second corresponding valley flank 41'. The pins 24, 24' and their corresponding recesses 42 and 42' (not indicated in figure 1) are preferably arranged at different locations along the Z axis.

As shown in figure 2, one or both edges 3 of the key blade may optionally be provided with further coding recesses 13 on one or both of the blade edges 3 for engagement with other pins (not shown in figure 1). Figure 2 also indicates an example of a predetermined set of discrete coding recess geometries 42₀, 42₁, 42₂ and 42₃, which correspond to a set of predetermined rotor pin lengths of the inclined pins such as the one illustrated in figure 1. The pin contact points of the coding recesses are indicated by the reference 6. The valley 40 is formed in the otherwise flat surface 7 of the key blade 1, and is shown as having a shallow V-section, although other section profiles could be used. For a reversible key, the valley 40 can be formed on both sides 7 of the key blade 1, with rotational symmetry, and any coding recesses (if present) on the edge 3 can be formed, with rotational symmetry, on both edges. The valley 40 also has run-in and run-out sections 43 and 44 respectively, which are described in more detail below. The run-in region 43 at the tip of the blade 1 is effectively a progressive thinning of the blade profile at the entrance to the valley 40, and provides a more gentle introduction of each pin into the valley 40 as the key blade 1 is inserted into the key channel. This can significantly reduce amount of wear on the key.

As can be seen in figure 3, the valley flank coding recesses 42₁, 42₂, 42₃ etc. are formed in the valley flanks 41 at different depths along the valley recess coding axis Cv, and may advantageously be formed using the same (eg frusto-conical or spherical) tool profile, such that the recesses have the same profile shape, but different depths and widths. Rotor pin 24 is shown with its tip in contact with the contact point 6 of a recess of coding type 42₁. The displacement axis of the pin 24 is indicated by Cv and is preferably substantially orthogonal to the valley flank 41 in which the recess is formed. A second row of coding recesses 42' may optionally be provided for engaging with a second row of pins 24', with displacement axis C'v, in opposed valley flanks 41'. Note that the displacement axis in each case is preferably also the coding axis, along which successively larger and smaller, deeper and shallower, recesses are formed, as illustrated. The key blade 1 shown is reversible, and the axis of rotation of the stator, when the key is inserted, is approximately at the intersection of the displacement axes Cv and C'ᵥ, in the case where the pins are substantially radial.

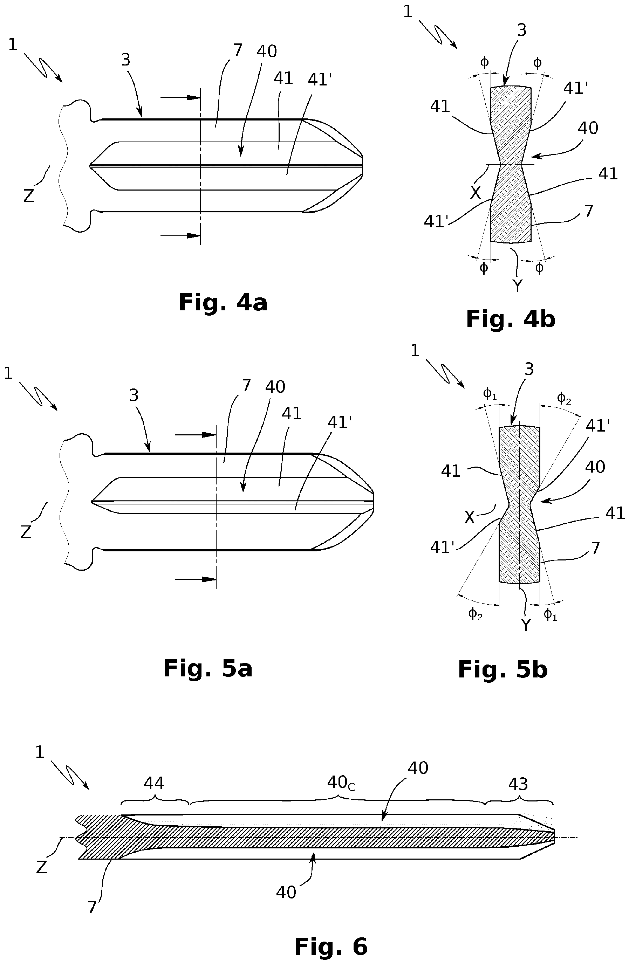

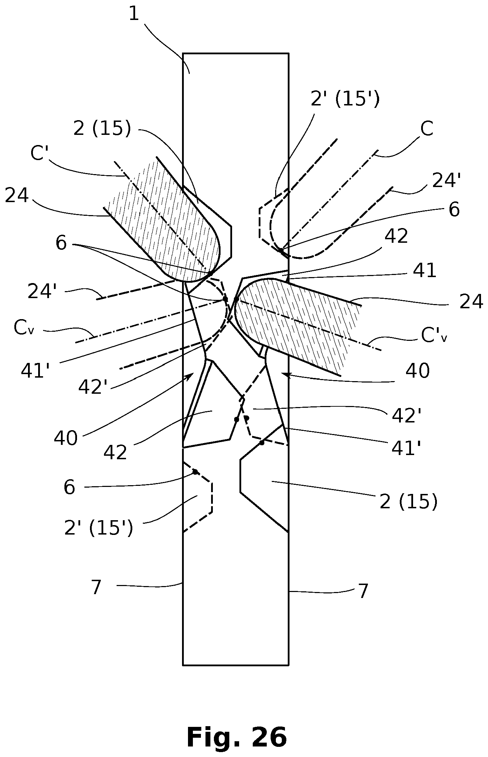

A key blank may be supplied as a commercial product to third-party key-cutters (also referred to as key-coders or key-resellers), who may stock a range of different blanks. Figures 4a and 4b show a first example of such a key blank product which can be used by the key coder as the basis for generating a key with a particular coding according to the invention. In this example, the valley 40 is substantially symmetrical about its longitudinal (Z) axis, such that flanks 41 and 41' are substantially identical but opposite. The valley flanks 41 and 41' lie at an angle φ to the Y-Z plane of the key blade 1. The angle φ is preferably shallow and may be between 10° and 30°, or 14° and 22°, for example. It may have the same value as ϕ or a different value. The angle range of 14° to 22° is preferred as it facilitates a maximum pin density while maintaining an efficient blocking function of the pin at the rotor periphery. The angle ranges in particular permit the distance between adjacent pins of the same row to be minimized, while maximizing the number of pins of other rows, at other angles, which can be combined with the valley pins (see the text below relating to figure 26, for example).

Figures 5a and 5b indicate an arrangement in which the valley 40 is reflectionally asymmetrical about its longitudinal axis (although if implemented as a reversible key, as shown, the key blade would be rotationally symmetrical about its longitudinal axis). The angles φ₁ and φ₂ are consequently different. The flanks 41 and 41' are different in area and in angle. Such an asymmetric valley may be used, for example, if one flank 41' of the key blade 1 has no coding recesses, or if it has significantly smaller recesses.

Such valley asymmetry, and/or a lateral position offset of the valley 40, in combination with locks having correspondingly-coded key channels, may also be used as a key coding parameter in addition to the above key coding using the different permutations of the recesses 42, 42' of different depth. In this way, it becomes possible to differentiate key codings for multiple subsystems (for example for different sites, where a different valley profile may be used for each site), and the number of coding permutations can be greatly increased.

Figure 6 shows example run-in and run-out regions of the valley 40 in cross-section. The run-in region 43 near the blade tip provides a gentle guide for the pins 24 when the key blade 1 is inserted into the key channel of the cylinder lock, thereby reducing wear on the key. The coding portion of the valley length is indicated by 40_{c}, and the run-out by 44. The run-out 44 may be formed as part of the manufacturing process, for example. As will be seen later, the tool used for forming the valley may also be used for forming the run-in 43 and the run-out 44.

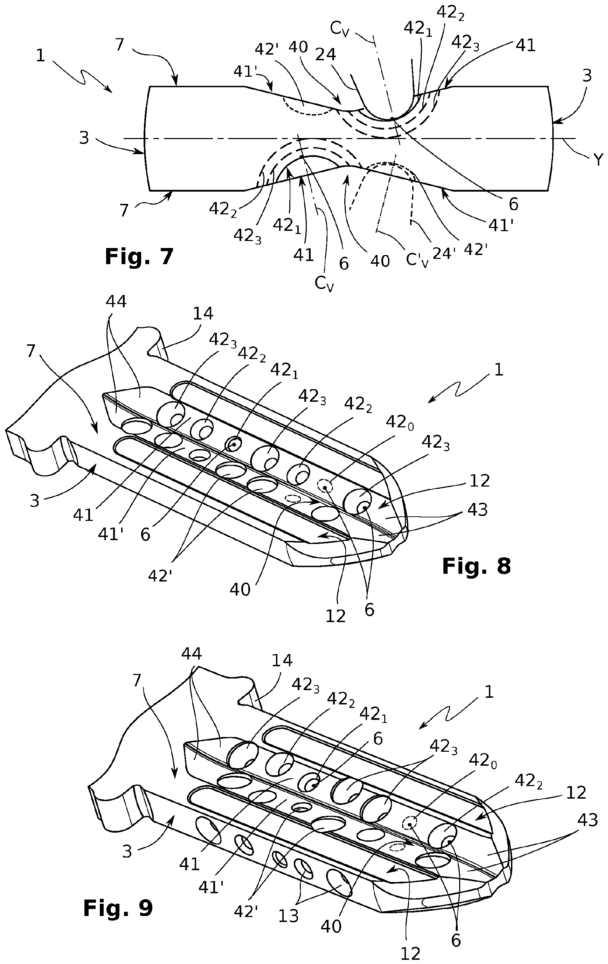

Figure 7 shows an alternative recess profile shape (spherical, cylindrical or parabolic, for example) which may be used instead of the truncated conical shape illustrated in other figures. By using a rounded pin tip engaging with a curved recess surface, the coding tolerances (in particular the recess depth, the pin length and the pin location and angle) may be defined more precisely. As with the other possible recess shapes, the recesses of figure 7 may advantageously be formed such that a central axis of symmetry (Cv) of the each recess is orthogonal to the substantially planar valley flank 41 in which they are formed. It is easier to achieve higher machining precision if the tool is perpendicular to the surface being machined.

Figure 8 shows a valley arrangement similar to that of figure 2, except that the area of face 7 adjacent to the valley 40 is provided with shallow machined areas 12 which can optionally be used as functional surfaces for a coding scheme for recesses in these areas. The functional surfaces 12 may be pre-machined in the key blank (ie the product supplied to the key coder), or they may be machined as part of the coding process. As will be described below, the functional regions 12 may be coded with the "C-coding" type recesses and angled pins described in more detail in the co-pending application mentioned above, where each pin engages with a side-flank of its recess, and the coding is defined by the position (in the Y dimension or in both the X and Y dimensions) of the side-flank, or at least the contact region of the side-flank.

Figure 9 shows a variant of the key blade 1 which at first sight appears similar to the one pictured in figure 8. However, whereas the coding recesses of the blade in figure 8 are substantially aligned along a longitudinal axis of the key blade 1 (the recesses have the same Y-position), the coding recesses 42 of figure 9 (and their corresponding pins) are deliberately laterally offset or otherwise non-aligned so that each pin of the cylinder lock follows a slightly different path along the flank surface 41 (they have different Y-positions). By arranging the pin-contact positions 6 so that they do not all follow the same track along the key blade, it is possible to avoid that the wear caused by the movement of the pin-contacts along the blade is concentrated in one Y-position, which can lead to the formation of a 'wear-furrow' in the surface of the key blade. The offset amount can be between 50 µm and 300 µm, for example, measured along the Y-axis (parallel to the blade face 7 and orthogonal to the Z-axis).

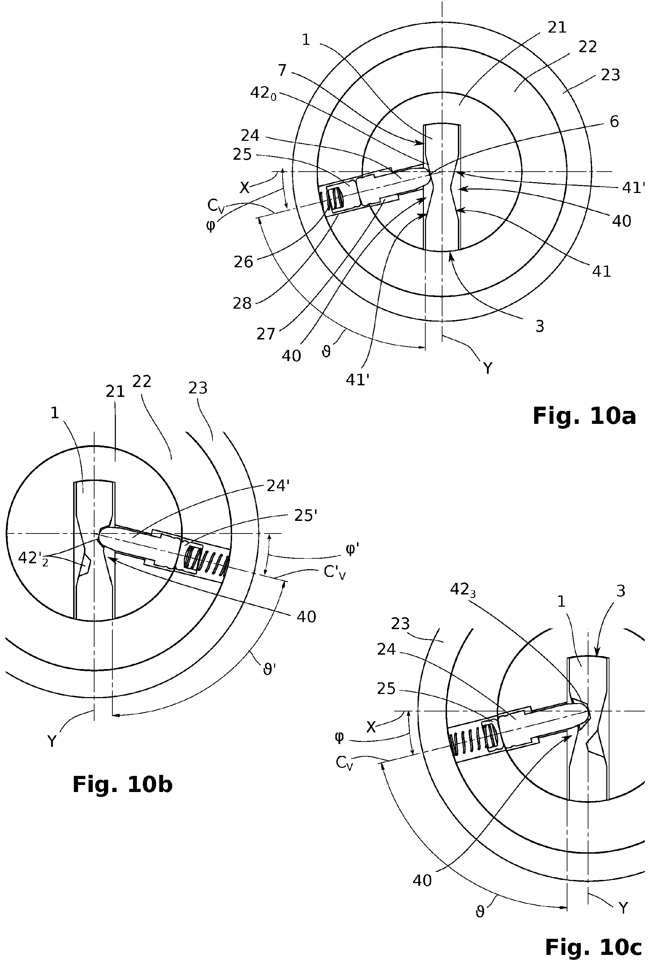

Figure 10a shows a pin 24 whose length is incompatible with the coding recess at the particular location (or vice versa, of course). In this case, the coding at the particular location is of type 42₀ (ie no depth - engage with the valley flank surface directly). The rotor pin 24 of figure 10a is too long for a coding recess of this depth (or the recess depth is too shallow for the pin 24). In any case, the pin projects outward beyond the rotor/stator interface and thus blocks the rotor from rotating.

Figures 10b and 10c, on the other hand, show instances in which the rotor pin length and the recess coding depth are compatible, such that the radial location where the rotor-pin meets the stator-pin coincides with the rotor/stator interface, and the rotor can be rotated by turning the key. The row of pins of figure 10a (only one pin is visible) are indicated with reference 24', 25' etc, because they are located on the opposite side of the key blade to the pins 24 of figures 10 and 10c. In other words, pins 24' belong to a different pin row of the cylinder lock than the pins 24 of figures 10a and 10c or 13 to 16.

Note that the presence of the valley, and the positioning of coding recesses which are preferably formed substantially orthogonal to the angled surface of the valley flank, renders the coded key more difficult to copy. The encoding depth values and the pin length values could intuitively be calculated by making depth measurements of the recesses, and length measurements of the pins, by taking the valley flank surface 41, 41' as the measuring reference. The flank angle could be measured with respect to the flat outline face 7 of the blade 1, and the location of each recess on the flank surface could be measured with respect to some feature of the valley (eg its deepest point). However, this measurement task is significantly more difficult and prone to error than simply measuring the recess depth as a distance from the outline face 7 of the key blade as would normally be done in the prior art.

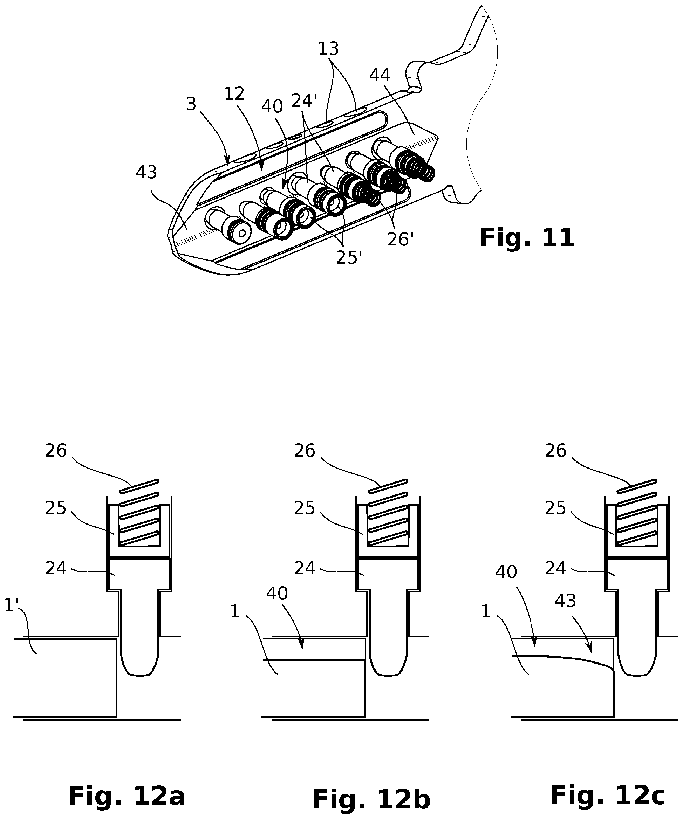

Figure 11 shows a key blade 1 similar to the one shown in figure 9, with its recesses offset to reduce wear, and illustrates how the pins 24' engage with the coding recesses, and are similarly offset (angular offset and/or lateral position offset).

Figures 12a to 12c illustrate how the valley 40, and the run-in 43, serve to ease the introduction of the key blade 1 past the coding pins 24 of the cylinder lock with reduced wear on the key tip when the key is inserted into the key channel. These figures show a cross-section of part of the pin and lock of figure 10a, for example, in a plane parallel to the Z axis and containing the axis C_{V}. The valley 40 and run-in 43 are preferably configured to have a simple coding function in that they permit or block the insertion of a key depending on whether or not the key has a valley 40, or a valley of the correct profile. This blocking function can be achieved in one or both of two ways. Firstly, the pins may be configured to protrude into the empty key channel such that they present an orthogonal or steeply-angled surface to the tip of a key being inserted. Such a situation is illustrated in figure 12a. Insertion of the key blade 1' is blocked by the orthogonal or steeply-angled side of the pin 24. In contrast, the pin(s) 24 preferably have a suitable length and shape such that they are displaced into the rotor by the tip of a key blade 1 according to the invention, having a valley 40 and a run-in 43. Figure 12a shows how a key blade 1' which does not have a valley will be blocked from insertion into the key channel past the coding pin(s) 24. Figure 12b shows how the presence of valley 40 in the key blade 1 will make it possible to insert the key blade 1 past the rotor pin(s) 24. Figure 12c shows how the presence of the run-in region described above will minimise the resistance to insertion of the key blade 1 past the rotor pin(s) 24 into the key channel.

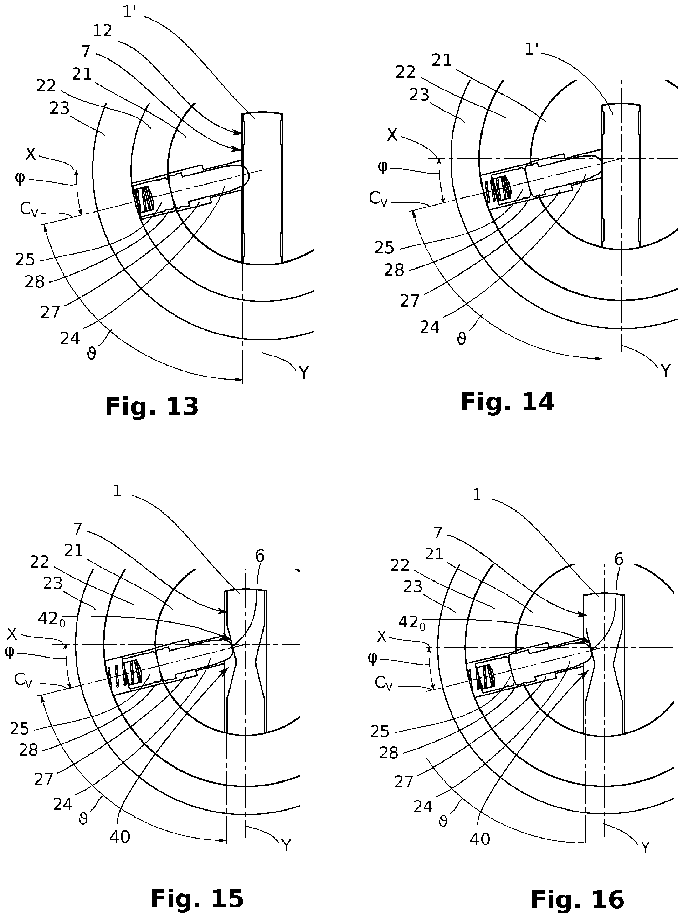

Secondly, some or all of the rotor pins 24 and their corresponding stator parts 25 may be coded such that they protrude into the key channel by a minimum distance and are prevented from being pushed into the rotor beyond this minimum protrusion distance. Figure 13 shows such a situation, in which the combined length of the rotor 24 and stator 25 parts of the pin is greater than the combined length of the rotor pin hole 27 and the stator pin hole 28 (ie the distance from the rotor/stator interface to the key channel), so that the pin must encroach into the key channel. If a standard flat key blade 1' (without the valley feature 40), or a key blade which comprises a valley profile which does not correspond to the coding of the cylinder lock, is inserted into the key channel, the insertion will be blocked by the pin 24 protruding into the key channel. In this example, even if it is possible to partially move the pin 24 out of the way by inserting the key blade, the key blade cannot move the pin sufficiently out of the way to insert the key fully. A key which has the correct valley dimensions, by contrast, will be able to pass the protruding pin tip, thanks to the presence of the correctly-profiled valley 40 in the key blade 1, and the pin 24 can perform its normal function, ie blocking or not blocking rotation of the rotor depending on the coding.

Figure 14 shows an arrangement in which the rotor pin 24 is too long for the flat inserted key blade 1' (or key blade with wrong valley profile) but the combined length of the stator and rotor pins is small enough to allow the key to be inserted. This means that, although the plain flat key 1' can be inserted, the rotor 21 cannot be rotated because rotation is blocked by the pin 24.

Figures 15 and 16 show arrangements in which a key 1 with a coding valley 40 is inserted into the key channel (the valley profile of the key matches the coding of the cylinder lock). In this example, the key's recess coding (42₀ in this instance, ie the pin-contact point is the valley flank surface itself) matches the pin-length coding and the rotor is free to rotate. In figure 16, the key's recess coding (42₀ as in figure 15) does not match the pin-length coding and the rotor is blocked from rotation by the rotor pin 24.

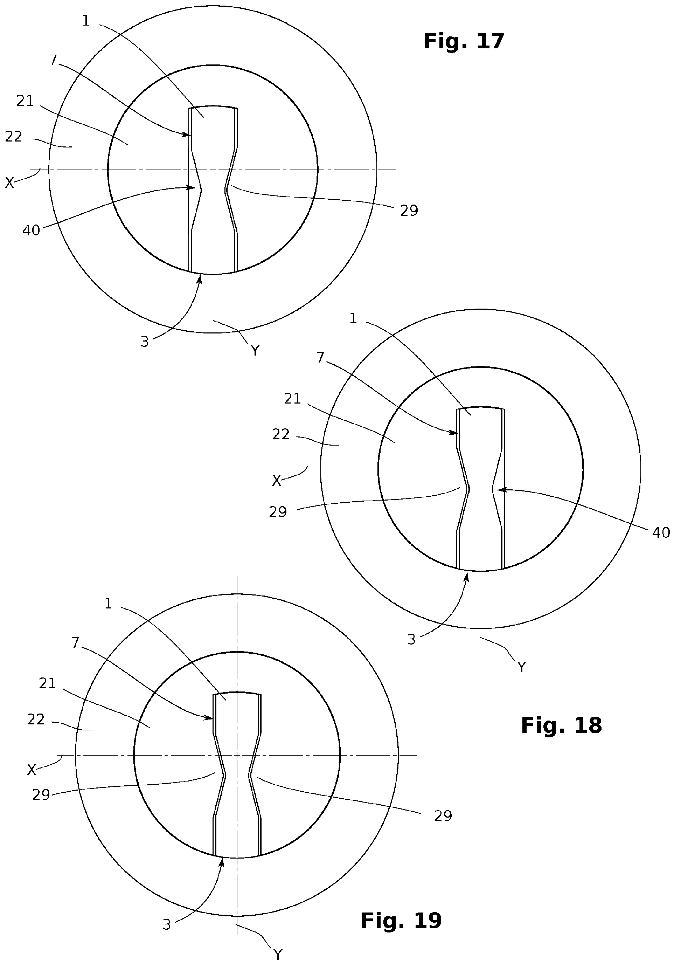

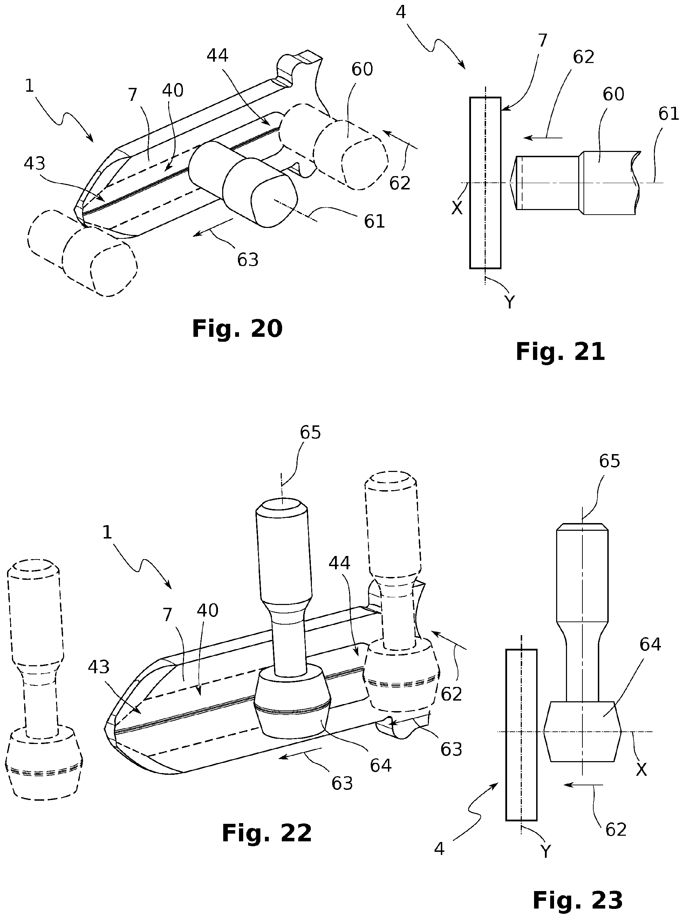

Figures 17 to 19 show various further arrangements for preventing the insertion of a standard flat key blade 1'. The key channel of the rotor 21 may be provided with a protruding part 29 which protrudes into the space corresponding to the valley 40 of the key blade 1. The protrusion 29 may be located at the mouth of the key channel, for example, so as to prevent any insertion of a key without the valley 40. Alternatively, the protrusion 29 can be located at a point further along the key channel, so as to block a full insertion of a key blade not having the valley 40. Or the protrusion 29 may extend along the length of the channel, or there may be multiple protrusions 29 located at different points along the key channel. The protrusion 29 may have the same profile shape as the valley 40 of the key blade 1, so that it occupies substantially all of the space of the valley, as shown in figures 17 to 19, or it may occupy only a portion of the cross-sectional area of the valley 40. Protrusion 29 may be provided on one side only of the key channel, as shown in figures 17 and 20, or protrusions 29 may be provided on both sides of the key channel, as indicated in figure 19. Protrusion(s) 29 may alternatively be implemented using one or more of the rotor pins (24, 24') of the cylinder lock. As already discussed in relation to figures 12a to 12c and 13, the rotor pins 24, together with their stator parts 25, may be adapted to act as a permanent block against insertion of a standard flat key blade 1', or a key blade 1 which has a valley 40 which is too shallow.

Figures 20 and 21 show how the blade 1 of the key blank can be pre-machined from a piece 4 of eg stamped sheet metal to form the valley 40 using a rotating milling tool 60 or similar, rotating about an axis 61 substantially perpendicular to the face 7 of the key blade 1, and having the profile of the valley at its tip. The cutting tool 60 is preferably moved along the direction 62 to begin removing material and then along direction 63 along the blade from the bow end towards the tip, to form the valley 40. Alternatively, the tool 60 may be moved in the opposite direction. As the tool 60 is moved along the Z-axis (direction 63), it may also be moved in the X-direction (direction 62) so as to form the run-in 43 and the run-out 44 described earlier. The machining may preferably done in a single pass, although it may be possible to achieve a better finish in multiple passes.

Figures 22 and 23 show an alternative fabrication possibility. In this case, the valley profile is formed by the peripheral surface of a rotating tool 64 rotating about an axis 65. The rotation axis may be selected to ensure the desired angle of the peripheral surface to the surface 7 of the raw piece 4. The displacement sequence of the tool may be similar to that described above in relation to figures 20 to 23.

The valley 40 may alternatively be formed by gouging or planing using a gouge or plane blade, for example a blade having the profile of the valley.

Figures 24a to 24c show a further example variant of a key blade 1 according to the invention. In this variant, in addition to the valley 40, the reversible key blade 1 is provided with a row of coding recesses 2 which are configured to cooperate with angled radial pins 24' which engage with the recesses 2 in such a manner that the pin-tip contact points 6 are located on a lateral flank of each recess 2. It should be noted that in many cases, the references 6 to the pin engagement contact points of the various recesses and grooves have been omitted from the figures for the sake of clarity. In some cases (see in particular figures 24a to 26), the pin contact points are denoted by a small dot.

A more detailed description of the angled pin recess coding arrangement ("C-coding") can be found in the co-pending patent application mentioned above. It is explicitly foreseen that any of the recess variants which are described in the co-pending document, and which are designed to cooperate with angled C-coding pins, can be combined in a single key blade with the valley 40 feature described above. The pins 24' corresponding to recesses 2 are arranged radially with respect to the cylindrical rotor 21. Each pin moves along an axis C, referred to as the coding axis, which runs substantially parallel to the X-Y plane of the key blade and inclined at an angle to the Y-Z plane of the key blade. The pin angle may be between 25° and 70°, or more preferably between 30° and 60°. The contact between the pin tip and the far flank (far as seen from the point of view of the pin 24') is preferably substantially orthogonal, or preferably within 10° or more preferably within 5° of orthogonal. The coding of each recess 2 is achieved by forming the recess such that its contact point 6 lies at one of a predefined set of different points along the coding axis C. This can be achieved by varying both the X and the Y positions of the recess flank which contains the contact region 6. Optionally, the location of the contact point 6 along the C direction can be varied by changing the Y coordinate of the far recess flank only. Optionally, the coding of the contact surface region for one or more of the pins can be achieved by arranging the recess so that the pin 24 engages at the base surface (ie the functional surface parallel to the face 7 of the key blade 1), rather than the far flank.

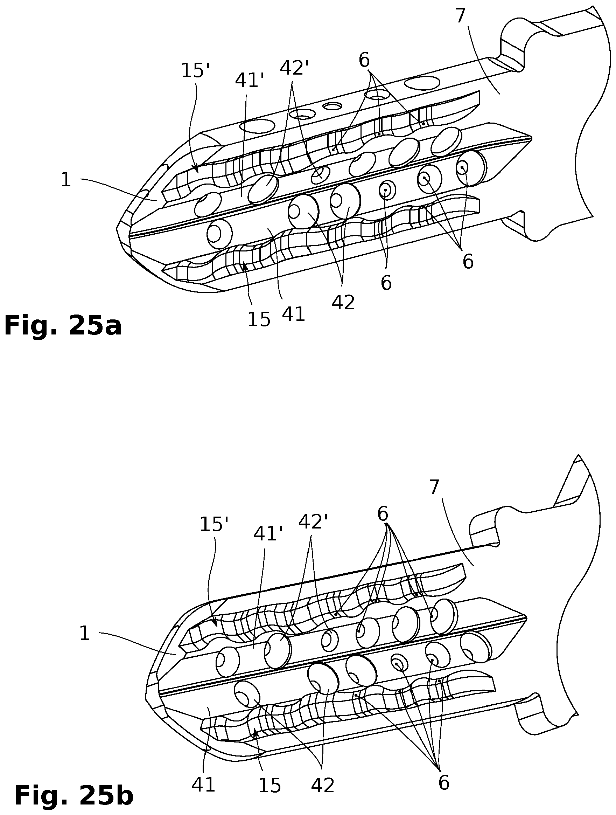

Figures 25a and 25b show how some or all of the C-coded recesses 2 and/or 2' shown in figures 24a to 24c may be implemented as continuous grooves 15, as described in more detail in the co-pending application mentioned above. Such grooves not only reduce wear and improve coding accuracy, but they also help to disguise the coding scheme and thereby make the key coding more difficult to carry out by an unauthorised person. The valley recesses 42 may optionally be implemented as grooves, in similar fashion. If present, coding recesses 13 on the edges 3 of the blade 1 may optionally be implemented as similar grooves.

Figure 26 shows in cross-section how the combined coding arrangement of the recesses 2, 2' or grooves 15, 15' (for steeply-angled pins engaging with the recess flanks), combined with the valley recesses 42, 42' (or grooves), offer an arrangement which allows many pins (in this case four) to be combined in a small space, optionally for rows of pins at different combinations of angles, so as to greatly increase the number of coding possibilities for a reversible key blade 1, without the need for a larger or more complex cylinder lock. The two shaded pins 24 are shown in the cross-section, and belong to two different rows of pins on opposite sides of the key blade 1. Two pins 24' shown in dashed outline are outside the plane of the cross-section, and belong to two other rows of pins on opposite sides of the key blade 1. The four rows of pins, and their corresponding recesses/grooves, could be combined in the arrangement shown, or they could be implemented alone, or in any other permutation. Further rows of pins and recesses/grooves could be added, where space permits, on the faces 7 or on the edges 3 of the key blade. Potential collisions between pins, or partial overlap or intersection of recesses, can be avoided by judicious choice of coding scheme (flank angle, recess coding depths and pin lengths and angles).

## Claims

1. Key blank for use in producing a coded key for a cylinder lock, the key blank comprising a flat longitudinal blade (1) for insertion into a cylinder lock, the blade comprising a first substantially planar face for being machined with a row of cylinder lock coding recesses for cooperating with pins (24, 24') of the cylinder lock, the blade (1) having a longitudinal (Z) axis, a lateral (Y) axis and a thickness (X) axis,
wherein the key blank further comprises:
a first longitudinal concavity (40), referred to hereafter as a valley, machined into the first face (7) and extending along the longitudinal axis (Z) of the blade (1) and along a majority of the length of the blade (1), the valley (40) comprising two lateral flanks (41, 41') forming opposite sides of the valley (40) and meeting at their lower edges, the valley (40) having a run-in region (43) at a tip of the blade (1) forming a progressive thinning of the blade profile at an entrance to the valley (40), the or each flank (41, 41') comprising a functional surface inclined at an angle (φ) of between 10° and 30°, or preferably between 14° and 22°, to the first face (7), and wherein the flank (41) has a width of between 1.2 mm and 5 mm, or preferably between 2 mm and 3.5 mm, measured along the lateral (Y) axis of the blade (1) and wherein the valley (40) has a width of between 20% and 80%, or preferably between 25% and 75%, of the width of the blade (1) and a depth of between 0.4 mm and 1.0 mm, or preferably between 0.5 mm and 0.8 mm, measured along the thickness (X) axis of the blade (1).

2. Key blank (1) according to claim 1, wherein the valley (40) is located with the line of its deepest point lying approximately along a centre-line of the blade (1).

3. Key blank (1) according to claim 1 or 2, wherein the flanks (41, 41') meet at their lower edges such that the valley (40) has a V- or U-shaped cross-section.

4. Key blank (1) according to one of the preceding claims, wherein the coded key is for reversible insertion into the cylinder lock, and wherein the key blank comprises a second face (7'), on the opposite side of the blade (1) to the first face (7), comprising a reversed version of the first valley.

5. Key blank according to one of the preceding claims, further comprising at least one pre-machined longitudinal region (12) of the face (7), substantially parallel to the face (7) and adjacent to the valley, for providing a further functional surface (12) in which further coding recesses (2, 2') are formable.

6. Key for a cylinder lock, the key comprising a key blank according to one of the preceding claims, wherein the or each functional surface (41, 41') is provided with at least three coding recesses (42₁, 42₂, 42₃, 42₄, 42₁', 42₂', 42₃', 42₄',), each coding recess having a coding depth along a coding axis (Cv) substantially orthogonal to the said functional surface (41, 41') in which the said each coding recess is formed, and each coding depth being one of at least three predetermined coding depths, the three predetermined coding depths being different one from another.

7. Key according to claim 6, wherein the at least three coding recesses (42, 42') are arranged in a substantially linear row along a coding Z-axis parallel to the longitudinal axis (Z).

8. Key according to claim 6 or claim 7, wherein at least one of the at least three coding recesses (42) is offset from the coding Z-axis by an offset distance of between 50 µm and 500 µm, or preferably between 100 µm and 300 µm.

9. Key according to one of claims 6 to 8, comprising at least three further coding recesses (2, 2') formed in each of one or more further longitudinal functional surface regions (12), substantially parallel to the face (7) and adjacent to the valley (40), wherein each further coding recess comprises an angled side flank providing a contact surface point (6) for substantially orthogonal contact engagement with a correspondingly angled pin of the cylinder lock, wherein each of the further coding recesses is coded by the Y-position, or by the X-position and the Y-position, of the angled side-flank, or of the contact surface region (6) of the angled side-flank.

10. Key according to one of claims 6 to 9, wherein the recesses (42, 42') or the further recesses (2, 2') in a row of recesses are formed as portions of a continuous groove (15) extending along at least a majority of the length of the key blade (1).

11. Key according to one of claims 6 to 10, wherein the valley (40) and the run-in region (43) are configured to have a simple coding function in that they permit or block the insertion of the key into a key insertion channel in the cylinder lock depending on whether or not the key has a valley (40), or a valley of the correct profile.

12. Cylinder lock comprising:
- a rotor (21) and a stator (22),
- a key insertion channel in the rotor for receiving a key according to one of claims 6 to 11,
- at least one row of at least three pins (24, 24'), the pins being arranged preferably radially in the rotor (21), wherein the pins are arranged for angled engagement with the coding recesses (42) of the key blade (1), wherein each of the said pins (24, 24') is inclined at an angle (θ) of more than 60°, or preferably more than 65°, and less than 80°, or preferably less than 75°, to the face (7) of the blade (1) when the key is inserted in the key channel, each of the pins (24) having one of a predetermined plurality of codings, the plurality comprising at least three codings and including a zero coding wherein the said pin (24, 24') is configured to permit rotation of the rotor only when the said pin is in contact engagement with the functional surface of the first flank (41) of the valley (40),
wherein the pins (24, 24') are configured such that they protrude into the key channel and are prevented from being pushed completely into the rotor, whereby a key blade which does not have a valley (40) is blocked from insertion by one or more of the coding pins (24, 24').

13. Lock system comprising a cylinder lock according to claim 12 and a key according to one of claims 6 to 11.

14. Method of producing a coded key according to one of claims 6 to 11 for a cylinder lock according to claim 12 from a key blank according to one of claims 1 to 5, the method comprising forming the coding recesses (42) in the or each said valley flank (41, 41').

15. Method according to claim 14, wherein the recess-forming step is performed using a machine tool having a rotation axis perpendicular to the functional surface of the flank (41, 41').

16. Method of producing a key blank according to one of claims 1 to 5 from a sheet of metal, the method comprising:
stamping, punching or cutting a piece of the sheet having the outline shape of the key blank; and
moving a profiled machine tool (60, 64) along a blade part of the piece so as to form the said valley (40) and the said functional surface.

## Patentansprüche

1. Schlüsselrohling zur Verwendung bei der Herstellung eines kodierten Zylinderschloss-Schlüssels, wobei der Schlüsselrohling ein flaches Längsblatt (1) zum Einführen in ein Zylinderschloss aufweist, wobei das Blatt eine erste im Wesentlichen ebene Fläche zum Bearbeiten mit einer Reihe von Zylinderschloss-Kodierungsaussparungen zur Kooperation mit Stiften (24, 24') des Zylinderschlosses aufweist, wobei das Blatt (1) eine Längsachse (Z), eine Querachse (Y) und eine Dickenachse (X) aufweist,
wobei der Schlüsselrohling zusätzlich umfasst:
eine erste längliche Aussparung (40), nachfolgend als Tal bezeichnet, welche in die erste Fläche (7) eingearbeitet ist und sich entlang der Längsachse (Z) des Blatts (1) und entlang eines Grossteils der Länge des Blatts (1) erstreckt, wobei das Tal (40) zwei seitliche Flanken (41, 41') aufweist, welche gegenüberliegende Seiten des Tals (40) bilden, wobei sich die Flanken (41, 41') an ihren unteren Kanten treffen, wobei das Tal (40) einen Einlaufbereich (43) an einer Spitze des Blatts (1) aufweist, der eine progressive Verdünnung des Blattprofils am Eingang des Tals (40) bildet, wobei die oder jede Flanke (41, 41') eine Funktionsfläche aufweist, die in einem Winkel (ϕ) zwischen 10° und 30° oder vorzugsweise zwischen 14° und 22° zur ersten Fläche (7) geneigt ist, und wobei die Flanke (41) eine Breite zwischen 1,2 mm und 5 mm oder vorzugsweise zwischen 2 mm und 3,5 mm, gemessen entlang der lateralen (Y) Achse des Blatts (1) aufweist, und wobei das Tal (40) eine Breite zwischen 20% und 80% oder vorzugsweise zwischen 25% und 75% der Breite des Blatts (1) und eine Tiefe zwischen 0,4 mm und 1,0 mm oder vorzugsweise zwischen 0,5 mm und 0,8 mm, gemessen entlang der Dickenachse (X) des Blatts (1) hat.

2. Schlüsselrohling (1) nach Anspruch 1, wobei das Tal so angeordnet ist, dass die Linie seines tiefsten Punktes ungefähr entlang einer Mittellinie des Blatts (1) liegt.

3. Schlüsselrohling (1) nach Anspruch 1 oder 2, wobei sich die Flanken (41, 41') an ihren unteren Kanten treffen, wobei das Tal (40) einen V- oder U-förmigen Querschnitt aufweist.

4. Schlüsselrohling (1) nach einem der vorhergehenden Ansprüche, wobei der kodierte Schlüssel zum reversiblen Einführen in das Zylinderschloss ausgebildet ist und wobei der Schlüsselrohling eine zweite, der ersten Seite (7) gegenüberliegende Seite (7') des Blatts (1) aufweist, die eine umgekehrte Ausführung des ersten Tals aufweist.

5. Schlüsselrohling nach einem der vorhergehenden Ansprüche, ferner umfassend mindestens einen vorbearbeiteten Längsbereich (12) der Fläche (7), im Wesentlichen parallel zur Fläche (7) und dem Tal angrenzend, um eine weitere funktionelle Fläche (12) bereitzustellen, in welcher weitere Kodierungsaussparungen (2, 2') formbar sind.

6. Schlüssel für ein Zylinderschloss, wobei der Schlüssel einen Schlüsselrohling gemäss einem der vorhergehenden Ansprüche aufweist, wobei die oder jede Funktionsfläche (41, 41') mit mindestens drei Kodierungsaussparungen (42₁, 42₂, 42₃, 42₄, 42₁', 42₂', 42₃', 42a') versehen ist, wobei jede Kodierungsaussparung eine Kodierungstiefe entlang einer Kodierungsachse (Cv) aufweist, die im Wesentlichen orthogonal zu der Funktionsfläche (41, 41') steht, in welcher Funktionsfläche jede Kodierungsaussparung gebildet ist und jede Kodierungstiefe eine von mindestens drei vorbestimmten Kodierungstiefenwerte hat, wobei die drei vorbestimmten Kodierungstiefenwerte voneinander verschieden sind.

7. Schlüssel nach Anspruch 6, wobei die mindestens drei Kodierungsaussparungen (42, 42') in einer im Wesentlichen linearen Reihe entlang einer Kodierungs-Z-Achse parallel zur Längsachse (Z) angeordnet sind.

8. Schlüssel nach Anspruch 6 oder Anspruch 7, wobei mindestens eine der mindestens drei Kodierungsaussparungen (42) von der Kodierungs-Z-Achse um einen Versatzabstand zwischen 50 µm und 500 µm oder vorzugsweise zwischen 100 µm und 300 µm versetzt ist.

9. Schlüssel nach einem der Ansprüche 6 bis 8, welcher mindestens drei weitere Kodierungsaussparungen (2, 2') aufweist, die in jedem von einem oder mehreren weiteren, im Wesentlichen parallel zur Fläche (7) und benachbart zu dem Tal (40) funktionellen Längsoberflächenbereichen (12), ausgebildet sind, wobei jede weitere Kodierungsaussparung eine abgewinkelte Seitenflanke aufweist, die einen Kontaktflächenpunkt (6) für einen im Wesentlichen orthogonalen Kontakteingriff mit einem entsprechend abgewinkelten Stift des Zylinderschlosses bereitstellt, wobei jede der weiteren Kodierungsaussparungen durch die Y-Position oder durch die X-Position und die Y-Position der abgewinkelten Seitenflanke oder des Kontaktflächenbereichs (6) der abgewinkelten Seitenflanke kodiert ist.

10. Schlüssel nach einem der Ansprüche 6 bis 9, wobei die Aussparungen (42, 42') oder die weiteren Aussparungen (2, 2') in einer Reihe von Aussparungen als Teile einer durchgehenden Nut (15) ausgebildet sind, die sich entlang mindestens ein Grossteil der Länge des Schlüsselblatts (1) erstreckt.

11. Schlüssel nach einem der Ansprüche 6 bis 10, wobei das Tal (40) und der Einlaufbereich (43) für eine einfache Codierungsfunktion ausgebildet sind, indem sie das Einführen des Schlüssels in einen Schlüsseleinführungskanal ermöglichen oder blockieren abhängig davon, ob der Schlüssel eine Nut (40) oder eine Nut mit dem richtigen Profil hat.

12. Zylinderschloss, umfassend:
- einen Rotor (21) und einen Stator (22),
- einen Schlüsseleinführungskanal in dem Rotor zur Aufnahme eines Schlüssels gemäss einem der Ansprüche 8 bis 11,
- mindestens eine Reihe von mindestens drei Stiften (24, 24'), wobei die Stifte vorzugsweise radial im Rotor (21) angeordnet sind, wobei die Stifte für einen abgewinkelten Eingriff mit den Kodierungsaussparungen (42) des Schlüsselblatts (1) angeordnet sind, wobei jeder der Stifte (24, 24') in einem Winkel (θ) von mehr als 60° oder vorzugsweise mehr als 65° und weniger als 80° oder vorzugsweise weniger als 75° zur Fläche (7) des Blatts (1) geneigt ist, wenn der Schlüssel im Schlüsselkanal eingeführt ist, wobei jeder der Stifte (24) einen von einer vorbestimmten Mehrzahl von Kodierungen aufweist, wobei die Mehrzahl mindestens drei Kodierungen aufweist und eine Nullkodierung umfasst, wobei der genannte Stift (24, 24') derart konfiguriert ist, um eine Drehung des Rotors nur zu ermöglichen, wenn der Stift in Berührung mit der Funktionsfläche der ersten Flanke (41) des Tals (40) steht,
wobei die Stifte (24, 24') derart angeordnet sind, dass sie in den Schlüsselkanal hineinragen und nicht vollständig in den Rotor verschiebbar sind, wodurch die Einführung eines Schlüsselblatts, das kein Tal aufweist (40) durch einen oder mehrere der Kodierungsstifte (24, 24') blockiert ist.

13. Schliesssystem, umfassend ein Zylinderschloss nach Anspruch 12 und einen Schlüssel nach einem der Ansprüche 6 bis 11.

14. Verfahren zur Herstellung eines kodierten Schlüssels nach einem der Ansprüche 6 bis 11 für ein Zylinderschloss nach einem Anspruch 12 aus einem Schlüsselrohling nach einem der Ansprüche 1 bis 5, wobei das Verfahren die Bildung der Kodierungsaussparungen (42) in der oder jeder der Talflanken (41, 41') aufweist.

15. Verfahren nach Anspruch 14, wobei der Aussparungsbildungsschritt unter Verwendung eines Werkzeugmaschinen-Bearbeitungswerkzeugs mit einer Drehachse senkrecht zur Funktionsfläche der Flanke (41, 41') durchgeführt wird.

16. Verfahren zur Herstellung eines Schlüsselrohlings nach einem der Ansprüche 1 bis 5 aus einem Blech, wobei das Verfahren aufweist:
Stempeln, Stanzen oder Schneiden eines Stücks des Blechs mit der Umrissform des Schlüsselrohlings; und
Bewegen eines profilierten Werkzeugmaschinen-Bearbeitungswerkzeugs (60, 64) entlang eines Blattteils des Stücks, um das genannte Tal (40) und die genannte Funktionsfläche zu formen.

## Revendications

1. Ébauche de clé destinée à être utilisée dans la production d'une clé codée pour une serrure à cylindre, l'ébauche de clé comprenant une lame longitudinale plate (1) destinée à être insérée dans une serrure à cylindre, la lame comprenant une première face sensiblement plane destinée à être usinée avec une rangée des évidements de codage de serrure à cylindre destinés à coopérer avec des goupilles (24, 24') de la serrure à cylindre, la lame (1) présentant un axe longitudinal (Z), un axe latéral (Y) et un axe d'épaisseur (X), dans laquelle l'ébauche comprenant en plus une première concavité longitudinale (40), appelée ci-après vallée, usinée dans la première face (7) et s'étendant le long de l'axe longitudinal (Z) de la lame (1) et sur une majorité de la longueur de la lame (1), la vallée (40) comprenant deux flancs latéraux (41, 41') formant des côtés opposés de la vallée (40) et se rejoignant au niveau de leurs bords inférieurs, la vallée présentant une région d'introduction au niveau d'une extrémité de la lame formant un amincissement progressif du profil de la lame à l'entrée de la vallée, le ou chaque flanc (41, 41') comprenant une surface fonctionnelle inclinée d'un angle (ϕ) compris entre 10° et 30°, ou de préférence entre 14° et 22°, à la première face (7), et dans laquelle le flanc (41) a une largeur comprise entre 1,2 mm et 5 mm, ou de préférence entre 2 mm et 3,5 mm, mesurée selon l'axe latéral (Y) de la lame (1) et dans laquelle la vallée (40) a une largeur comprise entre 20% et 80%, ou de préférence entre 25% et 75%, de la largeur de la lame (1) et une profondeur comprise entre 0,4 mm et 1,0 mm, ou de préférence comprise entre 0,5 mm et 0,8 mm, mesurée selon l'axe d'épaisseur (X) de la lame (1).

2. Ébauche de clé (1) selon la revendication 1, dans laquelle la vallée (40) est située avec la ligne de son point le plus profond se trouvant approximativement le long d'une ligne centrale de la lame (1).

3. Ébauche de clé (1) selon la revendication 1 ou 2, dans laquelle les flancs (41, 41') se rejoignent au niveau de leurs bords inférieurs de telle sorte que la vallée (40) présente une section transversale en forme de V ou de U.

4. Ébauche de clé (1) selon l'une des revendications précédentes, dans laquelle la clé codée est destinée à être insérée de manière réversible dans la serrure à cylindre, et dans laquelle l'ébauche de clé comprend une deuxième face (7'), du côté opposé de la lame (1) à la première face (7), comprenant une version inversée de la première vallée.

5. Ébauche de clé selon l'une des revendications précédentes, comprenant en outre au moins une région longitudinale pré-usinée (12) de la face (7), sensiblement parallèle à la face (7) et adjacente à la vallée, pour fournir une autre surface fonctionnelle (12) dans laquelle d'autres évidements de codage (2, 2') peuvent être formés.

6. Clé pour serrure à cylindre, la clé comprenant une ébauche de clé selon l'une des revendications précédentes, dans laquelle la ou chaque surface fonctionnelle (41, 41') est munie d'au moins trois évidements de codage (42₁, 42₂, 42₃, 42₄, 42₁', 42₂', 42₃', 42₄'), chaque évidement de codage ayant une profondeur de codage le long d'un axe de codage (Cv) sensiblement orthogonal à ladite surface fonctionnelle (41, 41') dans laquelle ledit chaque évidement de codage est formé, et chaque profondeur de codage étant l'une d'au moins trois profondeurs de codage prédéterminées, les trois profondeurs de codage prédéterminées étant différentes les unes des autres.

7. Clé selon la revendication 6, dans laquelle les au moins trois évidements de codage (42, 42') sont disposés selon une rangée sensiblement linéaire le long d'un axe Z de codage parallèle à l'axe longitudinal (Z).

8. Clé selon la revendication 6 ou la revendication 7, dans laquelle au moins un des au moins trois évidements de codage (42) est décalé par rapport à l'axe Z de codage d'une distance de décalage comprise entre 50 µm et 500 µm, ou de préférence entre 100 µm et 300 µm.

9. Clé selon l'une des revendications 6 à 8, comprenant au moins trois autres évidements de codage (2, 2') formés dans chacune d'une ou plusieurs autres régions de surface fonctionnelle longitudinale (12), sensiblement parallèles à la face (7) et adjacentes à la vallée (40), dans laquelle chaque autre évidement de codage comprend un flanc latéral incliné fournissant un point de surface de contact (6) pour un engagement de contact sensiblement orthogonal avec une goupille inclinée de manière correspondante de la serrure à cylindre, dans laquelle chacun des autres évidements de codage est codé par la position Y, ou par la position X et la position Y, du flanc latéral incliné, ou de la région de surface de contact (6) du flanc latéral incliné.

10. Clé selon l'une des revendications 6 à 9, dans laquelle les évidements (42, 42') ou les autres évidements (2, 2') dans une rangée d'évidements sont formés comme parties d'une rainure continue (15) s'étendant le long d'au moins une majorité de la longueur de la lame de clé (1).

11. Clé selon l'une des revendications 6 à 10, dans laquelle la vallée (40) et la région d'introduction (43) sont configurées pour avoir une fonction de codage simple en ce sens qu'elles autorisent ou bloquent l'insertion de la clé dans un canal d'insertion de clé dans la serrure à cylindre selon que la clé présente ou non une vallée (40), ou une vallée de profil correct.

12. Serrure à cylindre comprenant :
- un rotor (21) et un stator (22),
- un canal d'insertion de clé dans le rotor pour recevoir une clé selon l'une des revendications 6 à 11,
- au moins une rangée d'au moins trois goupilles (24, 24'), les goupilles étant disposées de préférence radialement dans le rotor (21), les goupilles étant disposées pour un engagement angulaire avec les évidements de codage (42) de la lame de clé (1), dans laquelle chacune desdites goupilles (24, 24') est inclinée d'un angle (θ) supérieur à 60°, ou de préférence supérieur à 65°, et inférieur à 80°, ou de préférence inférieur à 75°, par rapport à la face (7) de la lame (1) lorsque la clé est insérée dans le canal de clé, chacune des goupilles (24) ayant l'un d'une pluralité prédéterminée de codages, la pluralité comprenant au moins trois codages et incluant un codage zéro dans lequel ladite goupille (24, 24') est configuré pour permettre la rotation du rotor uniquement lorsque ladite goupille est en prise de contact avec la surface fonctionnelle du premier flanc (41) de la vallée (40),
dans laquelle les goupilles (24, 24') sont configurées de telle sorte qu'elles font saillie dans le canal de clé et ne peuvent pas être poussées complètement dans le rotor, grâce à quoi une lame de clé qui ne présente pas de vallée (40) est empêché d'être inséré par une ou plusieurs des goupilles de codage (24, 24').

13. Système de serrure comprenant une serrure à cylindre selon la revendication 12 et une clé selon l'une des revendications 6 à 11.

14. Procédé de fabrication d'une clé codée selon l'une des revendications 6 à 11 pour une serrure à cylindre selon la revendication 12 à partir d'une ébauche de clé selon l'une des revendications 1 à 5, le procédé comprenant la formation des évidements de codage (42) dans le ou chacun desdits flanc de vallée (41, 41').

15. Procédé selon la revendication 14, dans lequel l'étape de formation d'évidement est réalisée à l'aide d'une machine-outil ayant un axe de rotation perpendiculaire à la surface fonctionnelle du flanc (41, 41').

16. Procédé de réalisation d'une ébauche de clé selon l'une des revendications 1 à 5 à partir d'une tôle, le procédé comprenant :
estamper, poinçonner ou découper un morceau de la tôle ayant la forme du contour de l'ébauche de clé ; et
déplacer une machine-outil profilée (60, 64) le long d'une partie lame de la pièce de manière à former ladite vallée (40) et ladite surface fonctionnelle.
